# EUROPEAN PATENT SPECIFICATION

(11) **EP 1 273 539 B1**
(45) Date of publication and mention of the grant of the patent: **25.01.2006**
(21) Application number: 02396110.5
(22) Date of filing: 01.07.2002
(51) Int. Cl.: B65G 67/02

(54) **Method and arrangement for loading or unloading roll containers**
Verfahren und Anordnung zum Be- und Entladen von Rollcontainern
Procédé et dispositif pour le chargement et le déchargement de conteneurs roulants

(30) Priority: 03.07.2001 FI 20011449
(43) Date of publication of application: 08.01.2003
(73) Proprietor: Nekomat-Belos OY, 33800 Tampere (FI); Tetra Laval Holdings & Finance S.A., 1009 Pully (CH)
(72) Inventor: Mattila, Juhani, 37130 Nokia (FI); Falck, Sverre, 00160 Helsinki (FI)
(74) Representative: Kaukonen, Juha Veikko

(56) References cited:
- EP-A- 0 199 229
- EP-A- 0 594 417
- GB-A- 1 342 895
- US-A- 3 637 095
- US-A- 5 927 927

## Description

The invention relates to a method for loading or unloading roll containers, the method comprising a transfer device for transferring products into and/or out of a roll container comprising shelves.

The invention further relates to an arrangement for loading or unloading roll containers, the arrangement comprising a loading and/or unloading point which in turn comprises a frame and a space for a roll container to be loaded or unloaded, the roll container comprising at least one shelf, and a product transfer device.

The handling processes of various products include steps in which the products are containerised. In this context, the term containerisation refers to the transfer of a product into or out of a roll container, i.e. the loading or unloading of a roll container. A roll container is most often a metal cage standing on rollers and having shelves for arranging products for sale, the shelves being arranged to turn on a horizontal axis. The side walls of the roll container are usually fixed, whereas at least at one end of the container there is provided an openable gate. Prior art knows a number of roll container types differing in their dimensions as well as some other characteristics.

In this application, the term 'product' is used for any product that can be transported or sold, particular for the products of bulk goods industry, such as dairy industry. A product may also be a package containing one or more products.

According to current containerisation methods a roll container is loaded or unloaded either from its front or rear end. This involves a number of problems. When the containerisation takes place through a gate, the gate must naturally first be opened before the containerisation and then closed when the containerisation is completed. This is inconvenient and time-consuming, particularly since container types and their gates vary greatly. Moreover, roll containers are often subject to fairly rough handling and therefore they get bent and damaged. Consequently, the opening and closing of the gates may be quite difficult. Prior art also knows a method of containerising from the rear a roll container provided with fixed openings at the rear walls. A problem that arises here is that the openings are narrow and the containerisation of large products becomes particularly difficult. For example, the ridges of ridged milk cartons of 1.5 litres must be bent to the side. This naturally causes an additional work phase and extra costs, and yet a reliably operating solution is not achieved. For the above reasons, the operation of the equipment is unreliable. The containerisation of milk cartons, for example, must therefore be carried out using a product buffer between the apparatus filling the cartons and the containerisation equipment. In practice the product buffer is formed by extending the production line between the devices, whereby costs related to premises and investments are incurred. Moreover, the product buffer must be placed into a warm space, which increases the temperature of the product and thus impairs its preservability.

GB-A-1342895 discloses a transporter comprising a superimposed series of shelves on which articles can be placed, each shelf being hinged so that the shelves are individually movable between horizontal position and an upright position.

US-A-5927927 discloses a cart-loading machine having means for loading an accumulated array of objects onto one of the shelves of a multi-tiered cart. EP-A-0594417 discloses a truck of the rolling container type comprising shelves being arranged to turn on a horizontal axis.

It is an object of the present invention to provide a containerisation method, and arrangement avoiding the above problems.

The method of the invention is characterized in that the shelves are moved such that the transfer device has free access to the level to be loaded or unloaded and that the products are transferred by means of a substantially vertical movement into and/or out of the roll container.

The arrangement of the invention is characterized in that the loading and/or unloading point comprises means for turning empty roll container shelves into a vertical position to provide free access from above to the roll container level that is to be loaded or unloaded, and that product transfer device is arranged to transfer products into and/or out of the roll container from above.

A basic idea in the invention is that the products to be containerised are taken into and/or out of the roll container by a substantially vertical movement. According to a preferred embodiment of the invention, the roll container is arranged into a loading and/or unloading point for the duration of the containerisation, i.e. the loading or unloading of the roll containers, the loading and/or unloading point being provided with first turning members, which are pushed in a substantially horizontal direction under the shelves of the roll container and which upon turning from the horizontal position into a vertical position turn the shelf above from its position of use into a vertical position substantially parallel with the side walls of the roll container. According to a second preferred embodiment of the invention, the loading and/or unloading point is further provided with second turning members, which are in a su b-stantially vertical position when the first turning members are pushed under the container shelves and which upon turning from the vertical position into a horizontal position turn the corresponding shelf from a vertical position into the use position. According to a third preferred embodiment of the invention, the transfer device transferring the products is a robot.

An advantage of the invention is that the container gates do not need to be opened and closed for the containerisation. This simplifies the procedure and adds to its reliability and speed. When containerisation is carried out from above, the products fit into the container without difficulty, which further facilitates and speeds up the procedure. Containerisation is now reliable, and therefore no product buffers need to be arranged before the containerisation, which saves space. The reliability of the containerisation further enables high degree of automation of the containerisation equipment and thereby reduces the costs incurred.

In the following, the invention will be described in greater detail with reference to the accompanying drawings, in which
Figure 1 is a schematic top view of equipment of the invention;
Figures 2a to 2d are schematic views of a method and arrangement of the invention seen from the direction of travel of a roll container conveyor;
Figure 3 is a schematic, partly sectional side view of a detail of turning members in an arrangement of the invention; and
Figure 4 is a schematic top view of the operation of an arrangement of the invention.

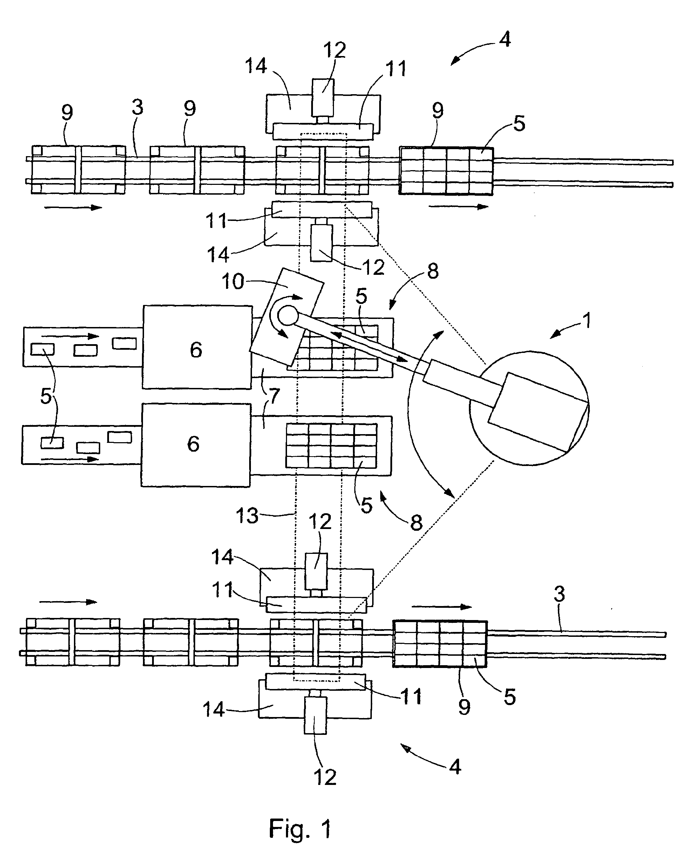

Figure 1 is a schematic top view of equipment of the invention. The equipment is meant for loading roll containers with products consisting of various bulk goods, such as dairy products. It is to be emphasised, however, that the embodiments of the invention are not restricted to the handling of a particular product.

The equipment comprises a transfer device, which in the embodiment shown in the Figure is a robot 1, and two product conveyors 2. The described equipment further contains two roll container conveyors 3 and two loading and/or unloading points 4.

The product conveyors 2 bring products 5 to the equipment for loading. The products 5 are first guided to grouping devices 6, each product conveyor 2 being provided with one. The grouping devices 6 form a level pattern 8, in a manner known per se, from the products 5 onto a grouping plane 7. In this context, the grouping plane may be any plane onto which products 5 can be placed. The level pattern 8 comprises a number of products 5 meant for a single shelf of a roll container 9, arranged according to the space available on the shelf. The shown level pattern 8 consists of a total of 16 products 5 arranged in four successive rows, with four products in each row. Naturally it is also possible to have a different number of products in the level pattern 8, their number being determined by the size of the roll container 9, the size of the product, and whether an entire shelf is to be filled with one level pattern 8 or not. The product conveyor 2 is well known to a person skilled in the art and therefore it will not be discussed in greater detail in this context.

The roll container conveyors 3 bring roll containers 9 into the loading and/or unloading point 4 for containerisation. Filled roll containers 9 are transferred for further handling on the same conveyors. The roll container conveyor 3 is fully known per se, and therefore it will not be discussed in greater detail in this context.

The loading and/or unloading points 4 comprise two transfer elements 11 arranged on opposite sides of the roll container conveyor 3 and substantially parallel with it. The transfer elements 11 are configured to move relative to a frame 14 of the loading and/or unloading point 4.

The robot 1, which in the Figure is a 4-degree of freedom robot, comprises a gripping device 10 that the robot 1 uses for gripping the products 5 to be containerised. The gripping device 10 shown in the Figure can be used for transferring all the products 5 in a level pattern 8 filling an entire roll container shelf at one go. The gripping device can, however, be replaced by various other gripping devices of different structure and operating principle for transferring one or more products at a time, as required. The gri p-ping device 10 not only grips the products but also finishes the level pattern 8 to its final form suitable for the roll container 9. A person skilled in the art will be familiar with various kinds of gripping devices 10 and therefore they are not discussed in greater detail in this context. The transfer device may also be other than a robot. As an alternative embodiment replacing the robot 1, the Figure shows a manipulator 13 depicted with a line of dots and dashes.

The robot 1 grips the level pattern 8 with the gripping device 10 and transfers the pattern to one of the loading and/or unloading points 4. The transfer elements 11 are pressed against the roll container 9 placed in the loading and/or unloading point 4 by means of power elements. In the embodiment shown in Figure 1, the power elements are pneumatic cylinders 12, although they may naturally be of some other type as well.

The transfer elements 11 are provided with first and second turning members, the operation and structure of which will be described in greater detail below. Briefly described, the loading of an empty roll container with products is carried out as follows: the turning members first turn the shelves of the roll container 9 into a vertical position parallel with the side walls of the container. This provides free access to the bottom of the roll container 9 from above. The robot 1 takes a product pattern 8 that is in the gripping device 10 to the bottom from above. When the product pattern 8 that is to be containerised has been placed to the bottom of the roll container and the gripping device 10 has moved away, the lowest shelf is turned into a horizontal position, i.e. its position of use. The robot 1 transfers the next product pattern 8 onto the shelf concerned, which is followed by the turning of the subsequent, upper shelf of the roll container 9 into its use position. The process continues until the roll container is loaded as desired, either completely or partly full. On the other hand, if products 5 are to be entered into an already partly loaded roll container 9, unloaded shelves are similarly turned into a vertical position to provide free access from above to the shelf that is to be loaded. The process then continues as described above.

It should be noted at this point that the equipment of the invention is also applicable in a reverse manner, i.e. for unloading products 5 from roll containers 9. The invention is also applicable in equipment that is capable of both loading and unloading roll containers 9. It is apparent that the product conveyors 2 can also be used for feeding the equipment with mutually differing products 5 and that different products 5 can be loaded and/or unloaded in one and the same roll container 9.

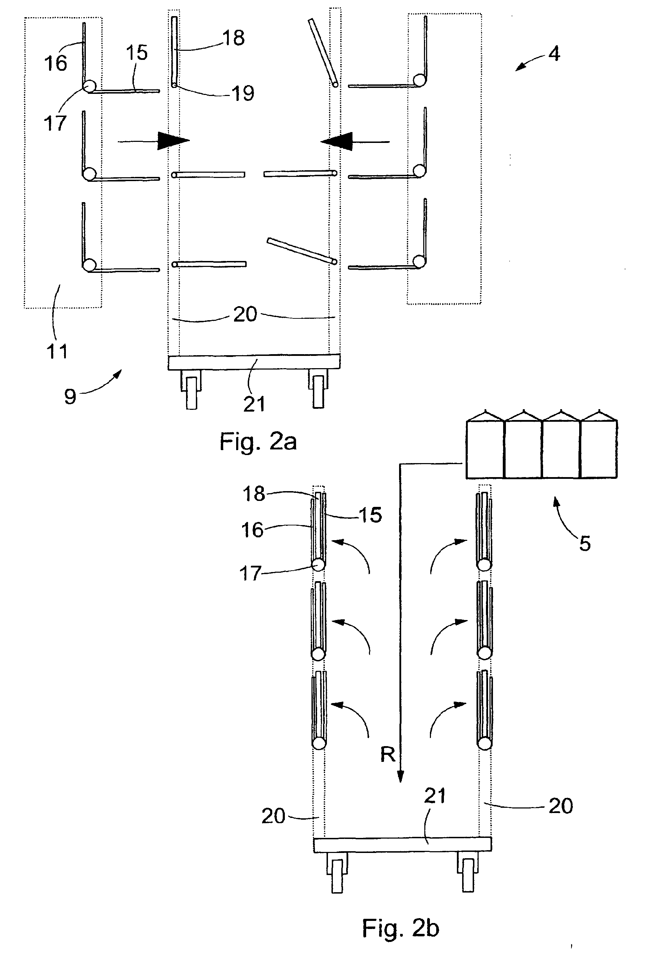

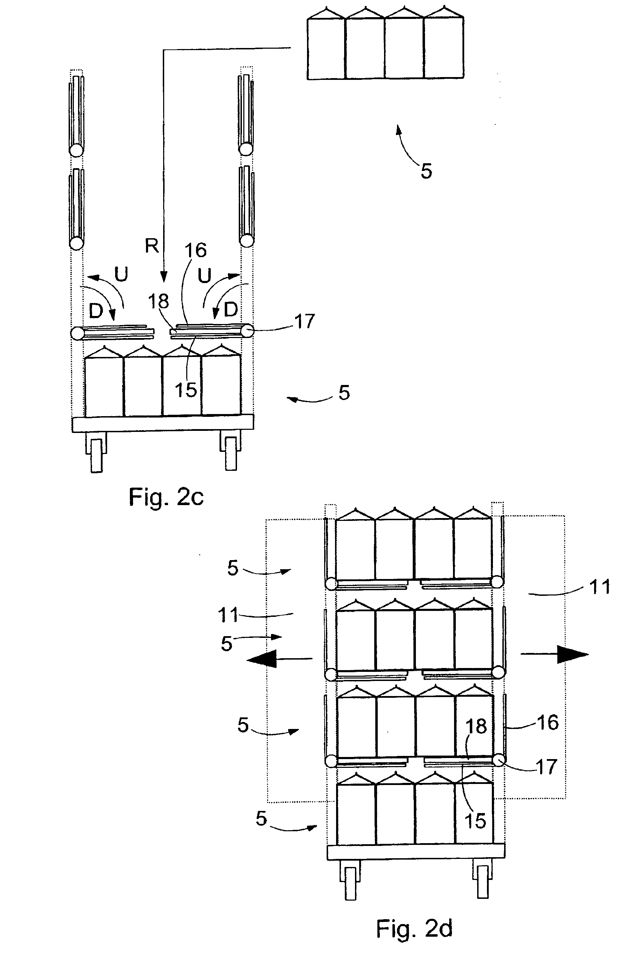

Figures 2a to 2d are schematic views of a method and arrangement of the invention seen from the direction of travel of the roll container conveyor. Figure 2a shows a roll container conveyor 3 which has been stopped so that the roll container 9 to be containerised stands in the loading and/or unloading point 4, between its transfer elements 11. For the sake of clarity, the roll container conveyor 3 is not shown in Figures 2a to 2d. The transfer elements 11 comprise first turning members 15 and second turning members 16. The turning members 15, 16 are arranged to the transfer element 11 in pairs such that a pair always comprises one first turning member 15 and one second turning member 16. The turning members of a pair have co-axial pivoting shafts 17. In the embodiment of Figures 2a to 2d there are altogether six pairs of turning members, three members in each transfer element 11 and always two opposite one another. The position of the turning members 15, 16 about the pivoting shaft 7 is changed for example by means of pneumatic cylinders or other similar power elements known per se and not shown in the Figures. The turning members 15, 16 of the pairs are turnable from one position to another independent of one another. In this case the turning members 15, 16 are implemented as plates made of steel or some other metal and having essentially the same width and length as the shelves in the roll container 9. The position of the turning members 15, 16 can be controlled for example by means of limit switches that indicate whether the turning members 15, 16 are turned to their extreme vertical or horizontal position.

Figure 2a shows how the transfer elements 11 are brought into contact with the roll container 9 such that the first turning members 15 are in a substantially horizontal position and therefore enter into the roll container 9 under a hinge 19 of a corresponding shelf 18. The second turning members 16, in turn, are in a vertical position. It should be noted that in this context the concept 'vertical' refers to the height direction of the roll container 9 placed into the loading and/or unloading point 4, and the concept 'horizontal' to the direction that is perpendicular to the vertical direction. When the transfer elements 11 have been brought into contact with the side walls 20 of the roll container, the pivoting shafts 17 of the turning members 15, 16 and the pivoting shafts of the hinges 19 of the shelves are substantially co-axial. Next, the first turning members 15 are turned upwards into a substantially parallel position with the side walls 20. When a roll container arrives for containerisation, the shelves 18 are often in random positions: some are in their horizontal use position, others are vertical, parallel with the side walls 20 of the roll container, and yet others are in positions somewhere in-between the two extremes. Irrespective of the position of the shelves 18, they all turn into a vertical position together with the first turning members 15. A completely free route is thereby provided from above to the bottom level 21 of the roll container 9. In other words, the shelves of the roll container 9 are turned into a vertical position such that free access to the level to be containerised is obtained from above. In this connection, the level to be containerised refers to the shelf 18 or the bottom level 21 of the roll container onto which products are to be transferred in a particular situation, and, correspondingly, when products 5 are to be unloaded from the roll container 9, it refers to the level from which products 5 are to be removed in a particular situation.

Sometimes loose metal wires or other similar protrusions from the side walls may penetrate into the roll container 9 and cause problems in the containerisation. Seen from the inside of the roll container 9, the side walls 20 are mostly covered by the plate-like first turning members 15; only the portions of the side walls 20 that are between the bottom level 21 and the lowest shelf 18 are uncovered. Any occasional protrusion will bend to the surface of the side walls 20, without harming containerisation. The first turning members 15 provide the roll container 9 with a space of standard dimensions extending from top to bottom, thereby ensuring problem-free containerisation.

The gripping device 10 of the transfer device lowers the products 5 to be containerised into the roll container 9 from above by means of a substantially vertical movement, indicated by arrow R. This substantially vertical movement may include some horizontal motion, for example just before the products are placed onto the level to be containerised. In Figure 2b the roll container is totally empty and the products are therefore lowered onto the bottom level 21. When the containerisation of the bottom level 21 is completed, i.e. the products 5 to be placed there are on the bottom level 21, the lowest shelves 18 are turned into their horizontal use position by pressing them with the second turning members 16 provided at the shelves in question, the turning movement being shown in Figure 2c by arrows D. At the same time, the corresponding first turning members 15 turn, together with the shelf 18 and the second pivoting member 16, into their horizontal position of use. When the lowest shelves 18 are in their position of use, the second turning members 16 are turned back into the vertical position, the turning movement being shown in the Figure by arrows U. Now the products 5 meant for the lowest shelf 18 can be containerised. The procedure is repeated for each shelf 18.

The containerisation continues from the bottom to the top, proceeding from a lower shelf 18 to an upper shelf 18 until the roll container 9 is full, or all products 5 meant for the roll container 9 are loaded. The transfer elements 11 are then withdrawn from the roll container 9 as shown in Figure 2d such that the first turning members 15 come out of the roll container 9 and reassume the position shown in Figure 2a. Next, the roll container conveyor 3 transfers the roll container 9 away from the loading and/or unloading point 4, which is then ready to receive the next roll container 9 to be containerised.

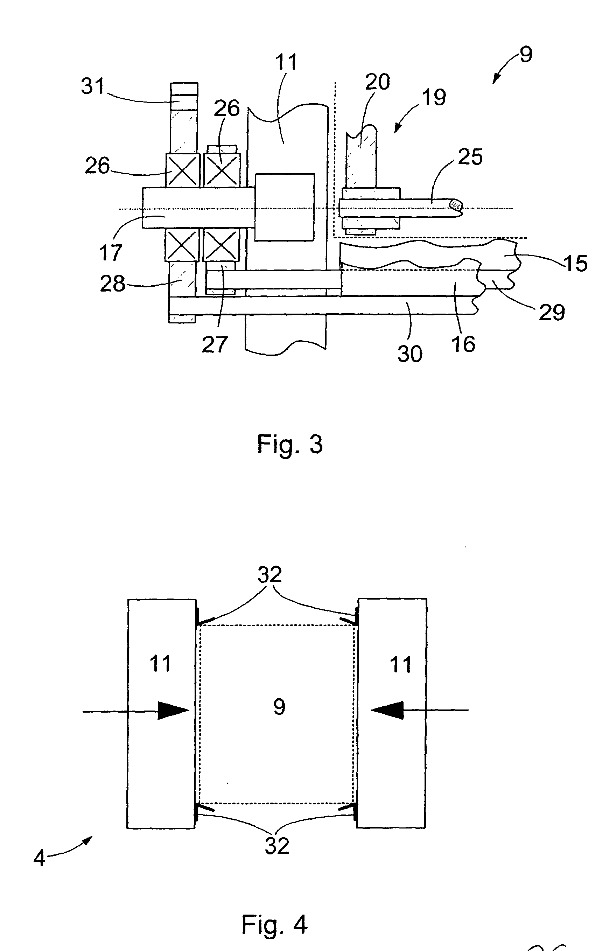

Figure 3 shows a schematic, partly sectional detailed side view of the turning members in an arrangement of the invention. The roll container 9 is arranged into the loading and/or unloading point 4 for containerisation. The first and the second turning members 15, 16 are turned into their vertical positions, i.e. the situation corresponds to the one shown in Figure 2b. It should be noted that Figure only provides a partial view of the turning members 15, 16 and the transfer element 11 of the loading and/or unloading point 4. The hinge 19 of the roll container shelf contains a spindle 25 which is substantially co-axial with the pivoting shaft 17 of the turning members 15, 16 attached to the transfer element 11. Due to this the turning members 15, 16 and the corresponding shelf 18 remain in a substantially same position in relation to each other during the turning movements. For simplicity of illustration, the shelf 18 is not shown in the Figure.

The pivoting shaft 17 is provided with bearings 26 attached to the shaft at the inner circumferences, while to the outer circumference of the bearings 26 is attached a first pivoting arm 27 and a second pivoting arm 28. To the first pivoting arm 27 is attached a first tie rod 29, and, correspondingly, to the second pivoting arm 28 a second tie rod 30. Although the Figure shows the tie rods 29, 30 only in part, they continue to the other end of the transfer element 11, which is provided with similar shafts, bearings and pivoting arms as those shown in Figure 3. The second pivoting arm 28 shown in Figure 3 comprises fastening means 31 for a power element operating the second turning member 16. Here the fastening means 31 is implemented as a hole made through the pivoting arm, the power element being fastened to the hole by means of a locking pin, or the like. The power element is not shown in Figure 3, but it is of the type of a pneumatic cylinder, or other similar power element known per se. At the other end of the transfer element 11, i.e. the end not shown in Figure 3, there are provided corresponding fastening means on the first pivoting arm 27. A power element operating the first turning member 15 is fastened to these fastening means.

The first turning member 15 can be turned independently of the second turning member 16, and vice versa. In other words, when one of the members is turned, the other may remain unturned or, alternatively, turn simultaneously with the first one.

Figure 4 is a schematic top view of the operation of an arrangement of the invention. It should be noted that like reference numerals are used in Figures 1, 2a to 2d, 3 and 4. The transfer element 11 in the loading and/or unloading point 4 is pressed against the roll container 9 depicted with a broken line. The transfer elements 11 are both provided with two substantially vertical straightening surfaces 32 attached to the elements at a distance from one another. The straightening surfaces 32 are substantially oblique in the direction of the roll container 9, and their distance is determined such that when the transfer elements 11 press against the roll container 9, the vertical edges of the roll container 9 are pressed between the straightening surfaces 32. If a slanting or bent roll container 9 arrives to the loading and/or unloading point 4, the straightening surfaces 32 straighten it into its proper shape. Hence the roll containers 9 are of a substantially constant shape when they are containerised.

The drawings and the related specification are only meant to illustrate the inventive idea. The details of the invention may vary within the scope of the claims. Consequently, it is fully evident that typical loading and/or unloading equipment naturally contains also other components and elements than those shown in the Figures. The equipment contains an appropriate number of product conveyors 2, roll container conveyors 3 and loading and/or unloading points 4 in each case. Also more than one transfer device, such as the robot 2, may be used. The equipment of the invention may comprise component assemblies different from those shown in the Figures; in addition, the components may be arranged in various other ways in relation to each other than what is shown in the Figures. The containerisation may produce mixed containers, i.e. various products 5 arranged into one and the same roll container 9. The loading and/or unloading point 4 may be provided with machine vision, laser measurement, or other similar measurement devices to check the dimensions of the roll container 9. If the dimensions exceed set tolerances, the roll container 9 is discarded and the next roll container 9 is received for loading and/or unloading. The equipment may be equipped with means for filling boxes or other packing. In that case the grouping plane 7 is made of two parts and can be opened. Below the plane, there is provided a box conveyor transferring boxes underneath the grouping plane 7 for filling. The products are dropped into a box by opening the grouping plane 7. This allows products unloaded from roll containers 9 to be placed into boxes. In equipment comprising a plural number of roll container conveyors 3, the operation of the roll container conveyors 3 may be synchronized such that when a roll container 9 on one roll container conveyor 3 is containerised, another roll container conveyor 3 transfers at the same time a roll container 9 into its loading and/or unloading point 4 for checking, eventual straightening and other similar measures. It is possible to both unload and load the same roll container 9 during one and the same containerisation procedure. It is also evident that the operation of the equipment is controlled by automated control devices, although for the sake of clarity they are not shown in the Figures.

## Claims

1. A method for loading or unloading roll containers, the method comprising a transfer device for transferring products (5) into and/or out of a roll container (9) comprising shelves (18), **characterized in that** the shelves (18) are moved such that the transfer device has free access to the level to be loaded or unloaded and that the products (5) are transferred by means of a substantially vertical movement into and/or out of the roll container (9).

2. A method according to claim 1, **characterized in that** empty roll container shelves (18) are turned into a vertical position to provide free access from above to the roll container (9) level to be loaded or unloaded.

3. A method according to claim 1 or 2, **characterized in that** when products (5) are transferred into the roll container (9), the shelf (18) that is next above the level whose loading has been completed is turned into use position.

4. A method according to claim 1 or 2, **characterized in that** when products (5) are transferred out of the roll container (9), the shelf (18) whose unloading has been completed is turned into a vertical position.

5. A method according to any one of the preceding claims, **characterized in that** the roll container (9) is arranged into a loading and/or unloading point (4) for the duration of the loading or unloading.

6. A method according to claim 5, **characterized in that** the roll container (9) is arranged into the loading and/or unloading point (4) by means of a roll container conveyor (3).

7. A method according to claim 5 or 6, **characterized in that** that the loading and/or unloading point (4) is provided with first turning members (15), which are pushed in a substantially horizontal direction under the shelves (18) of the roll container (9) and which upon turning from the horizontal position into a vertical position turn the corresponding shelf (18) from the use position into the vertical position substantially parallel with the side walls (20) of the roll container.

8. A method according to claim 7, **characterized in that** that the loading and/or unloading point (4) is provided with second turning members (16), which are in a substantially vertical position when the first turning members (15) are pushed under the shelves (18) of the roll container (9) and which second turning members (16), upon turning from the vertical position into a horizontal position, turn the corresponding shelf (18) from the vertical position into the use position.

9. A method according to any one of the preceding claims, **characterized in that** the transfer device is a robot (1).

10. A method according to any one of claims 1 to 8, **characterized in that** the transfer device is a manipulator (13).

11. An arrangement for loading or unloading roll containers, the arrangement comprising a loading and/or unloading point (4) which in turn comprises a frame (14) and a space for a roll container (9) to be loaded or unloaded, the roll container comprising at least one shelf (18), and a product transfer device, **characterized in that** the loading and/or unloading point (4) comprises means for turning empty roll container shelves (18) into a vertical position to provide free access from above to the roll container (9) level that is to be loaded or unloaded, and that the product transfer device is arranged to transfer products into and/or out of the roll container (9) from above.

12. An arrangement according to claim 11, **characterized in that** that the loading and/or unloading point (4) comprises means for turning roll container shelves (18) that are in the vertical position into a use position to allow products (5) to be loaded onto the shelf (18) concerned.

13. An arrangement according to claim 11 or 12, **characterized in that** the means for turning empty roll container shelves (18) into the vertical position comprise first turning members (15), which are arranged to be pushed in a substantially horizontal direction under the shelves (18) of the roll container (9) and which upon turning from the horizontal position into the vertical position are arranged to turn the corresponding shelf (18) from the use position into the vertical position substantially parallel with the side walls (20) of the roll container.

14. An arrangement according to claim 12 or 13, **character-**i z e d in that the means for turning roll container shelves (18) from the vertical position into the use position comprise second turning members (16), which are arranged into a substantially vertical position when the first turning members (15) are arranged under the shelves (18) of the roll container (9) and which second turning members (16), upon turning from the vertical position into the horizontal position, are arranged to turn the corresponding shelf (18) from the vertical position into the use position.

15. An arrangement according to claim 13 or 14, **characterized in that** when the turning members are arranged under the shelves (18) of the roll container (9), the pivoting shaft (17) of the turning members is su b-stantially co-axial with the spindle (25) of the hinge (19) of the corresponding shelf.

16. An arrangement according to any of claims 11 to 15, **characterized in that** the transfer device is a robot (1).

17. An arrangement according to any of claims 11 to 15, **characterized in that** the transfer device is a manipulator (13).

18. An arrangement according to any one of claims 11 to 17, **characterized in that** the arrangement comprises at least one roll container conveyor (3), which is arranged to transfer roll containers (9) into and out of the loading and/or unloading point (4).

19. An arrangement according to any one of claims 11 to 18, **characterized in that** the arrangement comprises at least one grouping device (6), which is arranged to receive products (15) and arrange them into a level pattern (8).

20. An arrangement according to any one of claims 11 to 19, **characterized in that** the first turning members (15) are formed of a plate which is dimensioned to be substantially equal to the shelf (18) of the roll container (9).

21. An arrangement according to any one of claims 11 to 20, **characterized in that** the loading and/or unloading point (4) is provided with straightening surfaces (32) for roll containers (9).

## Patentansprüche

1. Ein Verfahren zum Beladen oder Entladen von Rollcontainern, wobei das Verfahren eine Transfervorrichtung zum Transfer von Produkten (5) in einen und/oder aus einem Rollcontainer (9) umfasst, der Regalbretter (18) aufweist, **dadurch gekennzeichnet, dass** die Regalbretter (18) so bewegbar sind, dass die Transfervorrichtung freien Zugriff auf das zu beladende oder zu entladende Niveau hat und dass die Produkte (5) mittels einer im Wesentlichen senkrechten Bewegung in den und/oder aus dem Rollcontainer (9) transferierbar sind.

2. Ein Verfahren nach Anspruch 1, **dadurch gekennzeichnet, dass** die leeren Regalbretter der Rollcontainer (18) in eine senkrechte Position drehbar sind, um einen freien Zugriff von oben auf das zu beladende oder zu entladende Niveau des Rollcontainers (9) zu schaffen.

3. Ein Verfahren nach Anspruch 1 oder 2, **dadurch gekennzeichnet, dass** das Regalbrett (18), das als nächstes oberhalb der Höhe angebracht ist, deren Beladung abgeschlossen worden ist, in die Nutzposition gedreht wird, wenn Produkte (5) in den Rollcontainer (9) transferiert werden.

4. Ein Verfahren nach Anspruch 1 oder 2, **dadurch gekennzeichnet, dass** das Regalbrett (18), dessen Entladen abgeschlossen worden ist, in eine vertikale Position gedreht wird, wenn Produkte (5) aus dem Rollcontainer (9) transferiert werden.

5. Ein Verfahren nach einem der vorhergehenden Ansprüche, **dadurch gekennzeichnet, dass** der Rollcontainer (9) für die Dauer des Beladens oder Entladens an einen Lade-und/oder Entladepunkt (4) verbracht ist.

6. Ein Verfahren nach Anspruch 5, **dadurch gekennzeichnet, dass** der Rollcontainer (9) mittels einer Rollcontainerförderung (3) an den Lade- und/oder Entladepunkt (4) verbracht ist.

7. Ein Verfahren nach Anspruch 5 oder 6, **dadurch gekennzeichnet, dass** der Lade- und/oder Entladepunkt (4) mit ersten Drehteilen (15) versehen ist, die unter den Regalbrettern (18) des Rollcontainers (9) in einer im Wesentlichen horizontalen Richtung vorschiebbar sind und die beim Drehen aus der horizontalen Position in eine senkrechte Position das zugehörige Regalbrett (18) aus der Nutzposition in die senkrechte Position drehen, die im Wesentlichen parallel zu den Seitenwänden (20) des Rollcontainers ist.

8. Ein Verfahren nach Anspruch 7, **dadurch gekennzeichnet, dass** der Lade- und/oder Entladepunkt (4) mit zweiten Drehteilen (16) versehen ist, die in einer im Wesentlichen senkrechten Position sind, wenn die ersten Drehteile (15) unter die Regalbretter (18) des Rollcontainers (9) vorgeschoben sind, und wobei die zweiten Drehteile (16) beim Drehen aus der senkrechten Position in eine horizontale Position das zugehörige Regalbrett (18) aus der senkrechten Position in die Nutzposition drehen.

9. Ein Verfahren nach einem der vorstehenden Ansprüche, **dadurch gekennzeichnet, dass** die Transfervorrichtung ein Roboter (1) ist.

10. Ein Verfahren nach einem der Ansprüche 1 bis 8, **dadurch gekennzeichnet, dass** die Transfervorrichtung ein Manipulator (13) ist.

11. Eine Anordnung zum Beladen oder Entladen von Rollcontainern, wobei die Anordnung einen Lade- und/oder Entladepunkt (4) aufweist, der wiederum einen Rahmen (14) und einen Raum für einen zu beladenden oder zu entladenden Rollcontainer (9) aufweist, wobei der Rollcontainer mindestens ein Regalbrett (18) aufweist und die Anordnung eine Produkttransfervorrichtung aufweist, **dadurch gekennzeichnet, dass** der Lade- und/oder Entladepunkt (4) eine Einrichtung aufweist, um leere Rollcontainerregalbretter (18) in eine senkrechte Position zu drehen, um einen freien Zugriff von oben auf das Niveau des Rollcontainers (9) zu schaffen, das zu beladen oder zu entladen ist, und **dadurch**, dass die Produkttransfervorrichtung so angeordnet ist, dass sie Produkte von oben in den und/oder aus dem Rollcontainer transferiert.

12. Eine Anordnung nach Anspruch 11, **dadurch gekennzeichnet, dass** der Lade- und/oder Entladepunkt (4) eine Einrichtung aufweist, um Regalbretter (18) von Rollcontainern, die in der senkrechten Position sind, in eine Nutzposition zu drehen, um es zu erlauben, dass Produkte (5) auf das betreffende Regalbrett (18) ladbar sind.

13. Eine Anordnung nach Anspruch 11 oder 12, **dadurch gekennzeichnet, dass** die Einrichtung zum Drehen von leeren Regalbrettern (18) der Rollcontainer in eine senkrechte Position erste Drehteile (15) aufweist, die so angeordnet sind, dass sie in einer im Wesentlichen horizontalen Richtung unter die Regalbretter (18) des Rollcontainers (9) schiebbar sind und die beim Drehen aus der horizontalen Position in die senkrechte Position so angeordnet sind, dass sie das zugehörige Regalbrett (18) aus der Nutzposition in die senkrechte Position drehen, die im Wesentlichen parallel zu den Seitenwänden (20) des Rollcontainers ist.

14. Eine Anordnung nach Anspruch 12 oder 13, **dadurch gekennzeichnet, dass** die Einrichtung zum Drehen der Regalbretter (18) der Rollcontainer aus der senkrechten Position in die Nutzposition zweite Drehteile (16) umfasst, die in einer im Wesentlichen senkrechten Position angeordnet sind, wenn die ersten Drehteile (15) unter den Regalbrettern (18) des Rollcontainers (9) angeordnet sind, und wobei die zweiten Drehteile (16) beim Drehen aus der senkrechten Position in die horizontale Position so angeordnet sind, dass sie das zugehörige Regalbrett (18) aus der senkrechten Position in die Nutzposition drehen.

15. Eine Anordnung nach Anspruch 13 oder 14, **dadurch gekennzeichnet, dass** die drehende Welle (17) der Drehteile im Wesentlichen koaxial zu der Spindel (25) des Flansches (19) des zugehörigen Regalbretts ist, wenn die Drehteile unter den Regalbrettern (18) des Rollcontainers (9) angeordnet sind.

16. Eine Anordnung nach einem der Ansprüche 11 bis 15, **dadurch gekennzeichnet, dass** die Transfervorrichtung ein Roboter (1) ist.

17. Eine Anordnung nach einem der Ansprüche 11 bis 15, **dadurch gekennzeichnet, dass** die Transfervorrichtung ein Manipulator (13) ist.

18. Eine Anordnung nach einem der Ansprüche 11 bis 17, **dadurch gekennzeichnet, dass** die Anordnung zumindest eine Rollcontainerförderung (3) aufweist, die so angeordnet ist, dass sie die Rollcontainer (9) in den und aus dem Lade- und/oder Entladepunkt (4) fördert.

19. Eine Anordnung nach einem der Ansprüche 11 bis 18, **dadurch gekennzeichnet, dass** die Anordnung mindestens eine Gruppierungsvorrichtung (6) aufweist, die so angeordnet ist, dass sie Produkte (15) empfängt und sie in ein Muster (8) für das Niveau anordnet.

20. Eine Anordnung nach einem der Ansprüche 11 bis 19, **dadurch gekennzeichnet, dass** die ersten Drehteile (15) aus einer Platte gebildet sind, die so dimensioniert ist, dass sie im Wesentlichen gleich dem Regalbrett (18) des Rollcontainers (9) ist.

21. Eine Anordnung nach einem der Ansprüche 11 bis 20, **dadurch gekennzeichnet, dass** der Lade- und/oder Entladepunkt (4) Ausrichtoberflächen (32) für Rollcontainer (9) aufweist.

## Revendications

1. Procédé de chargement ou de déchargement de conteneurs roulants, le procédé comprenant un dispositif de transfert destiné à transférer des produits (5) dans ou depuis un conteneur roulant (9) comportant des étagères (18), **caractérisé en ce que** les étagères (18) sont déplacées de façon à ce que le dispositif de transfert ait libre accès au niveau à charger ou à décharger et que les produits (5) soient transférés par un mouvement sensiblement vertical dans ou depuis le conteneur roulant (9).

2. Procédé selon la revendication 1, **caractérisé en ce que** les étagères (18) du conteneur roulant vide sont rabattues en position verticale pour procurer un libre accès par le dessus au niveau du conteneur roulant (9) à charger ou décharger.

3. Procédé selon la revendication 1 ou 2, **caractérisé en ce que**, lorsque les produits (5) sont transférés dans le conteneur roulant (9), l'étagère (18) située juste au-dessus du niveau qui vient d'être chargé est tournée dans sa position d'utilisation.

4. Procédé selon la revendication 1 ou 2, **caractérisé en ce que**, lorsque les produits (5) sont transférés hors du conteneur roulant (9), l'étagère (18) qui vient d'être déchargée est tournée en position verticale.

5. Procédé selon l'une des revendications précédentes, **caractérisé en ce que** le conteneur roulant (9) est disposé dans un emplacement de chargement et/ou de déchargement (4) pendant la durée du chargement ou du déchargement.

6. Procédé selon la revendication 5, **caractérisé en ce que** le conteneur roulant (9) est disposé dans l'emplacement de chargement et/ou de déchargement (4) au moyen d'un convoyeur de conteneurs roulants (3).

7. Procédé selon la revendication 5 ou 6, **caractérisé en ce que** l'emplacement de chargement et/ou de déchargement (4) est équipé de premiers éléments tournants (15) qui sont poussés dans une orientation sensiblement horizontale sous les étagères (18) du conteneur roulant (9) et qui, lors de leur rotation de la position horizontale à la position verticale, font pivoter l'étagère (18) correspondante de la position d'utilisation à la position verticale sensiblement parallèle aux parois latérales (20) du conteneur roulant.

8. Procédé selon la revendication 7, **caractérisé en ce que** l'emplacement de chargement et/ou de déchargement (4) est équipé de deuxièmes éléments tournants (16) qui sont dans une position sensiblement verticale lorsque les premiers éléments tournants (15) sont poussés sous les étagères (18) du conteneur roulant (9), lesquels deuxièmes éléments tournants (16), lors de leur rotation de la position verticale à la position horizontale, font pivoter l'étagère (18) correspondante de la position verticale à la position d'utilisation.

9. Procédé selon l'une des revendications précédentes, **caractérisé en ce que** le dispositif de transfert est un robot (1).

10. Procédé selon l'une des revendications 1 à 8, **caractérisé en ce que** le dispositif de transfert est un manipulateur (13).

11. Disposition ou dispositif de chargement ou de déchargement de conteneurs roulants, la disposition comprenant un emplacement de chargement et/ou de déchargement (4) qui à son tour comporte une structure (14) et un espace pour un conteneur roulant (9) à charger ou décharger, le conteneur roulant comportant au moins une étagère (18), et un dispositif de transfert de produits, **caractérisé**(e) en ce que l'emplacement de chargement et/ou de déchargement (4) comporte un moyen pour faire pivoter des étagères (18) du conteneur roulant vide en position verticale pour procurer un libre accès par le dessus au niveau du conteneur roulant (9) à charger ou décharger, et en ce que le dispositif de transfert de produits est disposé de façon à transférer des produits dans et/ou depuis le conteneur roulant (9) par le dessus.

12. Disposition selon la revendication 11, **caractérisée en ce que** l'emplacement de chargement et/ou de déchargement (4) comporte un moyen pour faire pivoter les étagères (18) du conteneur roulant de la position verticale à une position d'utilisation pour permettre le chargement de produits (5) sur l'étagère (18) concernée.

13. Disposition selon la revendication 11 ou 12, **caractérisée en ce que** le moyen permettant de faire pivoter les étagères (18) du conteneur roulant vide en position verticale comprend des premiers éléments tournants (15), qui sont disposés pour être poussés dans une direction sensiblement horizontale sous les étagères (18) du conteneur roulant (9) et qui, lors de leur rotation de la position horizontale à la position verticale, sont disposés pour faire pivoter l'étagère (18) correspondante de la position d'utilisation à la position verticale sensiblement parallèle aux parois latérales (20) du conteneur roulant.

14. Disposition selon la revendication 12 ou 13, **caractérisée en ce que** le moyen permettant de faire pivoter les étagères (18) du conteneur roulant de la position verticale à la position d'utilisation comprend des deuxièmes éléments tournants (16) qui sont disposés dans une position sensiblement verticale lorsque les premiers éléments tournants (15) sont disposés sous les étagères (18) du conteneur roulant (9), lesquels deuxièmes éléments tournants (16), lors de leur rotation de la position verticale à la position horizontale, sont disposés pour faire pivoter l'étagère (18) correspondante de la position verticale à la position d'utilisation.

15. Disposition selon la revendication 13 ou 14, **caractérisée en ce que**, lorsque les éléments tournants sont disposés sous les étagères (18) du conteneur roulant (9), l'arbre pivotant (17) des éléments tournants est sensiblement co-axial avec l'axe (25) de la charnière (19) de l'étagère correspondante.

16. Disposition selon l'une des revendications 11 à 15, **caractérisée en ce que** le dispositif de transfert est un robot (1).

17. Disposition selon l'une des revendications 11 à 15, **caractérisée en ce que** le dispositif de transfert est un manipulateur (13).

18. Disposition selon l'une des revendications 11 à 17, **caractérisée en ce que** la disposition comprend au moins un convoyeur de conteneurs roulants (3) qui est disposé pour transférer des conteneurs roulants (9) dans et depuis l'emplacement de chargement et/ou de déchargement (4).

19. Disposition selon l'une des revendications 11 à 18, **caractérisée en ce que** la disposition comprend au moins un dispositif de groupement (6) prévu pour recevoir des produits (15) et les disposer selon un motif de groupement (8) sur plusieurs niveaux.

20. Disposition selon l'une des revendications 11 à 19, **caractérisée en ce que** les premiers éléments tournants (15) sont formés d'une tôle dimensionnée de façon à ce que sa taille soit sensiblement égale à celle de l'étagère (18) du conteneur roulant (9).

21. Disposition selon l'une des revendications 11 à 20, **caractérisée en ce que** l'emplacement de chargement et/ou de déchargement (4) est équipé de surfaces de redressement (32) pour les conteneurs roulants (9).
